# EUROPEAN PATENT APPLICATION

(11) **EP 4 576 367 A1**
(43) Date of publication of application: **25.06.2025**
(21) Application number: 23219267.4
(22) Date of filing: 21.12.2023
(51) Int. Cl.: H01M 50/262, H01M 50/30, H01M 50/358, H01M 50/367, H01M 50/258

(54) **ELECTRICAL STORAGE SYSTEM WITH GAS VENTING ARRANGEMENT**

(71) Applicant: VOLVO TRUCK CORPORATION, 405 08 Göteborg (SE)
(72) Inventor: RAGOT, Sebastien, 413 11 GÖTEBORG (SE); LANDVIK, Sondre, 417 61 GÖTEBORG (SE); HÖRDER, Jonatan, 431 34 MÖLNDAL (SE)
(74) Representative: Kransell & Wennborg KB

(57) **Abstract**

The present disclosure relates to an electrical storage system (ESS) (1) comprising a plurality of battery packs (2a,2b,2c) arranged side-by-side, each of the battery packs (2a,2b,2c) being spaced from an adjacent battery pack (2a,2b,2c) such that the side surfaces (3a,3b,3c) of the adjacent battery packs (2a,2b,2c) form inter-battery pack gas channels (4) and wherein each of the battery pack (2a,2b,2c) is provided with a side gas vent opening (5a,5b,5c) to one of the inter-battery pack gas channels (4).

## Description

### TECHNICAL FIELD

The disclosure relates generally to Electrical Storage Systems (ESS). In particular aspects, the disclosure relates to an ESS with a gas venting arrangement. The disclosure can be applied to heavy-duty vehicles, such as trucks, buses, construction equipment, and marine vessels, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage systems, often in the form of traction batteries, need to be relatively large in size to be able to contain a sufficient level of energy such that the vehicle can be operated at an acceptable range using the electric traction motors.

Thermal runaway is a phenomenon which may affect rechargeable energy storage systems and which may in particular be critical to those which are relatively large in size. This condition occurs when the temperature rapidly increases inside one of the battery cells and enters an uncontrollable, self-heating state. Thermal runaway may result in ejection of gas, extremely high temperatures, smoke and fire.

For vehicles provided with rechargeable energy storage systems there is therefore a need to increase the safety and reduce the risks of such systems, both in terms of protection of the vehicle and for the surrounding environment.

### SUMMARY

According to a first aspect of the disclosure, an ESS comprising a plurality of battery packs arranged side-by-side is provided, each of the battery packs being spaced from an adjacent battery pack such that transverse side surfaces of the adjacent battery packs form inter-battery pack gas channels and wherein each of the battery pack is provided with a side gas vent opening to one of the inter-battery pack gas channels.

Battery packs in ESS may be provided with venting ports including safety valves to improve safety in case of a thermal runaway including pressure buildup within the battery packs. Such safety valves may be pressure release valve which opens at a certain set pressure to safely release overpressure and avoid an explosion or further destruction of the outer battery pack housing.

In an extreme situation of thermal propagation between the battery packs, very hot gasses and fire may come out from these venting ports. It is therefore important to place the venting ports in a good location so that gases/fire are not directed outwardly to the surroundings, risking igniting stationary structures or surrounding vehicles.

The first aspect of the disclosure may seek to at least partly mitigate the problems of ESS linked to thermal runaway by means of a facilitated and cost-effective solution. The fact that the side gas vent opening, optionally provided with safety valves, opens to the inter-battery pack gas channels protects the surroundings by means of the walls of the respective battery packs. A further technical benefit of the present disclosure is that gas channels are provided by means of the already existing structure and that the present disclosure thus provides a compact, space-reducing, and cost-efficient solution. Gas vent openings instead facing rearwards or frontwards of the ESS structure may lead to propagation either where a driver is located or may also risk melting the tires which may cause an explosion.

Optionally in some examples, including in at least one preferred example, the battery packs are mechanically interconnected to each other. A technical benefit may include that a mechanically robust solution with a limited number of components is provided. Furthermore, due to the fact that the battery packs as mechanically interconnected they will act as one common mass, reducing the overall acceleration level for sensitive components of the battery packs. Additionally, mounting of the battery packs directly to each other entailing that there is no, or minimal, relative movement between the battery packs and that the ESS structure may be tighter and that more energy may be stored.

Mechanically interconnected does not necessary imply that the battery packs are directly mechanically connected to each other, the may for example be connected by means of longitudinally extending rod(s) extending through the battery packs, such as being inserted in through holes extending in the longitudinal direction in an outer structure of the battery packs, and thereby being mechanically interconnected.

Optionally in some examples, including in at least one preferred example, each one of the battery packs are mechanically connected to the adjacent battery pack(s). A technical benefit may include that a mechanically robust solution is provided and that the battery packs are easier to install. However, due to the closeness between the battery packs, the need of an efficient safety system may increase.

Optionally in some examples, including in at least one preferred example, the side gas vent openings are provided with a directional cap, directing the gas exiting the side gas vent opening to flow tangential to the side surface of the battery pack on which the respective side gas vent opening is provided. A technical benefit may include that the gas exiting the side gas vent openings may is not directed against an adjacent battery pack, thereby increasing safety.

Optionally in some examples, including in at least one preferred example, the adjacent battery packs are in physical contact with each other at respective connecting members protruding from the respective side surfaces of the battery packs. A technical benefit may include that the distance between the adjacent battery packs forming the inter-battery pack gas channels may be kept in a predefined and stable manner and additionally facilitates assembly of the battery packs.

Optionally in some examples, including in at least one preferred example, a combined height (hi + h₂) of the connecting members of the adjacent battery pack, as measured from a main side surface of the respective battery pack, is greater than the height (h_{c}) of the direction cap provided between the side surfaces of the respective battery pack. The height of the respective member are measured in a longitudinal direction of the ESS and does not correlate to the height of the battery packs. A technical benefit may include that the distance between the adjacent battery packs is secured, thereby securing space for the side gas vent openings and the directional caps.

Optionally in some examples, including in at least one preferred example, each one of the battery packs is provided with one or more side gas opening per opposing side surface of the respective battery pack. A technical benefit may include an increased safety by means of a faster release of overpressure inside the battery pack(s).

Optionally in some examples, including in at least one preferred example, each one of the battery packs is provided with a first and a second side gas opening per opposing side surface. A technical benefit may include an increased safety by means of a faster release of overpressure inside the battery pack(s).

Optionally in some examples, including in at least one preferred example, the ESS comprises a first and a second end plate at a respective first and second opposing side of the ESS, the first and the second opposing sides of the ESS being formed by the respective outmost sides of the two outermost battery packs of the ESS, and wherein the respective first and second end plates are spaced from the respective outermost battery packs such that an outermost side surface of the respective outermost battery packs together with the respective first and second end plates form a respective end plate/battery pack gas channel. A technical benefit may include that each of the battery packs in the ESS may comprise side gas openings on opposing side surfaces of the battery pack, while still enable direction and steering of the vented gas by means of the gas channels.

Optionally in some examples, including in at least one preferred example, the adjacent battery packs are provided with a respective side gas vent opening to the same inter-battery pack gas channel and wherein these side gas vent openings are arranged in non-overlapping positions. A technical benefit may include to providing a compact and size optimized ESS as less space is required when the side gas vent openings are not aligned with each other. The security may also be enhanced when the side gas vent openings are provided with a distance to each other.

Optionally in some examples, including in at least one preferred example, each one of the plurality of the battery packs are L-shaped and comprises two side gas vent opening on each side and wherein the two side gas vent openings provided on the same side are arranged offset, as seen in a height direction of the ESS. A technical benefit may include that the gas vent openings may be arranged off set as seen in the height direction of the battery packs. A further advantage may be that gas vent openings arranged on different heights of the battery packs are connected internally to different battery cell modules inside the battery packs. For an L-shaped battery cell, there may for example be two longer and two shorter cell modules horizontally installed inside the L-shaped housing, wherein venting possibilities from each cell module need to be secured.

Optionally in some examples, including in at least one preferred example, the ESS comprises a side protection plate extending over a longitudinal side of the battery packs of the ESS. The longitudinal rear side of the battery pack may be the side connecting the transverse sides of each battery pack. A technical benefit may include that gas in the inter-battery pack gas channels is prevented to exit at the longitudinal side of the battery pack. The longitudinal side of the battery packs corresponds to a longitudinal side of a vehicle, when the ESS is provided in a vehicle and may face outwardly, as seen from the vehicle.

Optionally in some examples, including in at least one preferred example, the side protection plate is a steel side protection plate. A technical benefit may include an enhanced safety.

Optionally in some examples, including in at least one preferred example, the side protection plate is a common side protection plate for each one of the plurality of battery packs covering the entire longitudinal side of the ESS. A technical benefit may include an enhanced protection and reduced risk of gas leakage from the gas venting channels.

Optionally in some examples, including in at least one preferred example, one or more outlets of the inter-battery pack gas channels is/are provided at an upper side and/or bottom side of the ESS, preferably at a bottom side of the ESS. A technical benefit may include that the risk of sending gases/fire out to the surroundings, risking igniting stationary structures or surrounding vehicles is reduced.

According to a second aspect of the disclosure, an electrical propulsion system comprising an electrical machine and an ESS according to the first aspect is provided, wherein the electric machine is configured to receive power from the ESS. The second aspect of the disclosure may seek to provide an electrical propulsion system with reduced risk associated with thermal runaway in the battery packs of the ESS and with a cost-efficient and facilitated solution.

According to a third aspect of the disclosure a vehicle is provided, the vehicle comprising an ESS according to the first aspect or an electrical propulsion system according to the second aspect. The third aspect of the disclosure may seek of the disclosure may seek to provide a vehicle comprising an ESS having a reduced risk associated with thermal runaway in the battery packs of the ESS and with a cost-efficient and facilitated solution.

According to a fourth aspect of the disclosure, a stationary energy storing system comprising an ESS according to the first aspect is provided. The fourth aspect of the present disclosure may seek to provide a stationary energy storing system comprising an ESS having a reduced risk associated with thermal runaway in the battery packs of the ESS and with a cost-efficient and facilitated solution.

According to a fifth aspect of the disclosure, a marine vessel comprising an ESS according to the first aspect is provided. The fifth aspect of the disclosure may seek to provide a marine vessel comprising an ESS having a reduced risk associated with thermal runaway in the battery packs of the ESS and with a cost-efficient and facilitated solution.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a side view of a vehicle according to an example.
**FIG. 2a** illustrates an ESS, as seen from above, and according to an example.
**FIG. 2b** illustrates two exemplary adjacent battery pack from the ESS illustrated in **FIG. 2a****.**
**FIG. 3** illustrates a battery pack of an ESS according to an example.

### DETAILED DESCRIPTION

The detailed description set forth below provides information and examples of the disclosed technology with sufficient detail to enable those skilled in the art to practice the disclosure.

The following disclosure aims at minimizing the problems of ESS linked to thermal runaway by means of a facilitated and cost-effective solution. The fact that the side gas vent opening, optionally provided with safety valves, opens to the inter-battery pack gas channels protects the surroundings by means of the walls of the respective battery packs. A further technical benefit of the present disclosure is that gas channels are provided by means of the already existing structure and that the present disclosure thus provides a compact, space-reducing, and cost-efficient solution. Gas vent openings instead facing rearwards or frontwards of the ESS structure may lead to propagation either where a driver is located or may also risk melting the tires which may cause an explosion.

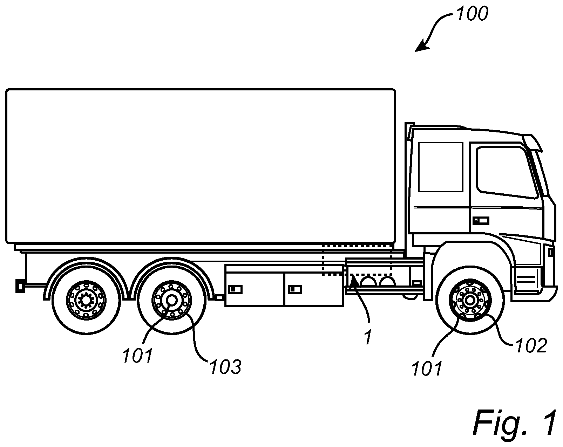

Turning to Fig. 1, which is an illustration of a vehicle 100 according to an example. The exemplified vehicle 100 is configured to be at least partly propelled by one or more electric traction motors 101. In Fig. 1, the electric traction motors 101 are exemplified as wheel hub motors connected to the pair of front wheels 102 as well as to the foremost pair of rear wheels 103. However, the vehicle 100 may alternatively comprises a single electric traction motor connected to the wheels via a conventional propulsion shaft (not shown). The at least one electric traction motor 101 is configured to apply a propulsive power to the wheels of the vehicle during propulsion, and to generate electric power during braking.

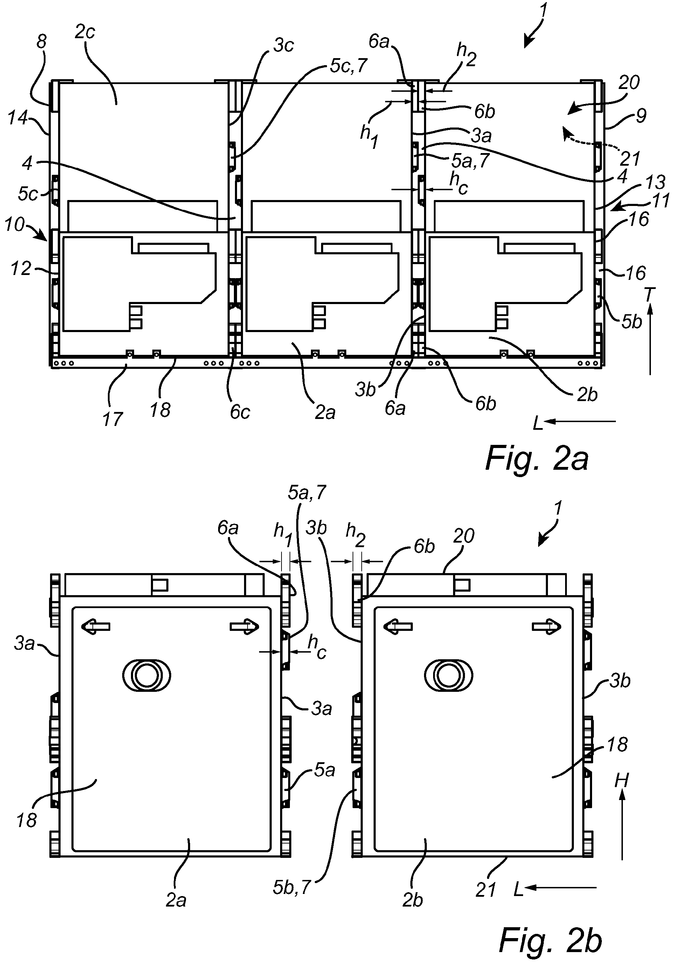

The vehicle further comprises an ESS 1, also referred to as a high-voltage vehicle battery. The ESS 1 is configured to feed electric power to the electric traction motor 101 during propulsion of the vehicle 100 and to receive electric power during braking. In order to further describe the ESS 1, reference is now made to Fig. 2.

Fig. 2a illustrates an ESS 1 according to an example and as seen from above. The ESS 1 comprising a plurality of battery packs 2a,2b,2c arranged side-by-side and extends in a longitudinal direction L and a transverse direction T. Each of the battery packs 2a,2b,2c being spaced from an adjacent battery pack 2a,2b,2c such that the side surfaces 3a,3b,3c of the adjacent battery packs 2a,2b,2c form inter-battery pack gas channels 4 and wherein each of the battery packs 2 is provided with a side gas vent opening 5a,5b,5c to one of the inter-battery pack gas channels 4. The battery packs 2a,2b,2c are mechanically interconnected to each other such that adj acent battery packs 2a,2b,2c are connected at connecting members 6a,6b,6c protruding from the respective side surfaces 3a,3b,3c of the battery packs 2a,2b,2c.

In the example illustrated in FIG. 2a, the side gas vent openings 5a,5b,5c are each provided with a directional cap 7, directing the gas exiting the side gas vent opening 5 to flow tangential to the side surface 3a,3b,3c of the battery pack 2a,2b,2c on which the respective side gas vent opening 5a,5b,5c is provided. The directional cap 7 is however an optional feature of the present disclosure. The gas vent openings 5a,5b,5c comprise safety valves which may be pressure release valve which opens at a certain set pressure to safely release overpressure and avoid an explosion or further destruction of the outer battery pack housing.

In the example illustrated in FIG.2a, a combined height, i.e. hi + h₂, of the connecting members 6a,6b of the adjacent battery pack, as measured from the side surface 3a,3b of the respective battery pack 2a,2b, is greater than the height h_{c} of the direction caps 7 provided between the side surfaces 3a,3b of the respective battery pack 2a,2b, as measured from the side surface 3a,3b and individually.

In the ESS 1 shown in FIG. 2a, each one of the battery packs 2a,2b,2c is provided with two side gas opening 5a,5b,5c per opposing side surface 3a,3b,3c. However, the battery packs 2a,2b,2c, may optionally be provided with one side gas opening 5a,5b,5c per battery pack 2a,2b,2c or one side gas opening 5a,5b,5c per opposing side surface 3a,3b,3c of each battery pack 2a,2b,2c.

The ESS 1 furthermore comprises a first and a second end plate 8,9 at a respective first and second opposing transverse side 10,11 of the ESS 1. The first and the second opposing transverse sides 10,11 of the ESS 1 are formed by the respective outmost transverse sides 12,13 of the two outermost battery packs 2c,2b of the ESS 1. The respective first and second end plates 8,9 are spaced from the respective outermost battery packs 2c,2b such that an outermost transverse side 12,13 of the respective outermost battery packs 2c,2b together with the respective first and second end plates 8,9 form a respective end plate/battery pack gas channel 16.

As shown in FIG. 2a, the adjacent battery packs 2a,2b,2c are provided with a respective side gas vent opening 5a,5b,5c to the same inter-battery pack gas channels 4 and wherein these side gas vent openings 5a,5b,5c are arranged in non-overlapping positions, i.e. off set as seen in the height direction and/or the transverse direction T of the ESS 1.

The ESS 1 furthermore comprises a side protection plate 17 extending over a longitudinal side 18 of the battery packs 2 of the ESS 1. The longitudinal side 18 of the battery packs 2a,2b,2c extending in the longitudinal direction L of the ESS 1, corresponding to a longitudinal direction, i.e. driving direction, of the vehicle as shown in Fig. 1 when the ESS is arranged in the vehicle, the side protection plate 17 covers the entire longitudinal side 18 of the ESS 1 and is thus a common side protection plate 17 for each one of the battery packs 2a,2b,2c arranged side-by-side. The side protection plate 17 may be made of any durable and robust material, one preferred material is steel.

As the side protection plate 17 closes the inter-battery pack gas channel 4 along the longitudinal side 18 of the ESS 1, an outlet 19 the inter-battery pack gas channels 5 is provided at an upper side 20 or alternatively or additionally at the bottom side 21 of the ESS 1.

FIG. 2b illustrates two adjacent battery packs 2a,2b being spaced a part and as seen from the longitudinal side 18. The battery packs 2a,2b extends between the upper side 20 and the bottom side 21 of the ESS 1.

Each of the battery packs 2a,2b are provided with two side gas vent openings 5 to the inter-battery pack gas channels 4. The battery packs 2a,2b are mechanically interconnected to each other such that adjacent battery packs 2a,2b are connected at connecting members 6a,6b protruding from the respective side surfaces 3a,3b of the battery packs 2a,2b. The connecting member 6a protrudes with a height hi from the side surface 3a and the connecting member 6b protrudes with a height h₂ from the side surface 3b. The heights h₁ and h₂ are preferably the same.

In the example illustrated in FIG. 2b, the side gas vent openings 5a,5b are provided with a respective directional cap 7, directing the gas exiting the side gas vent opening 5a,5b to flow tangential to the side surface 3a,3b of the battery pack 2a,2b on which the respective side gas vent opening 5a,5b is provided. The gas vent openings 5a,5b comprise safety valves which may be pressure release valve which opens at a certain set pressure to safely release.

As may be seen in FIG. 2b, the adjacent battery packs 2a,2b are provided with two side gas vent openings 5a,5b at their respective opposing side surfaces 3a-3a,3b-3b, i.e. opposing transverse side surfaces, wherein these side gas vent openings 5a,5b are arranged in non-overlapping positions, as seen in a height direction H of the battery packs 2a,2b, and/or as seen in a transverse direction T, which is more clearly illustrated in Fig. 2a.

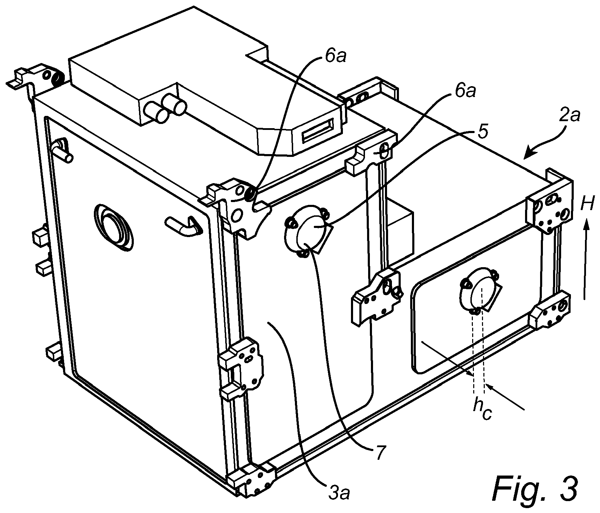

FIG. 3 illustrates one of the battery packs 2a of the ESS 1 illustrated in FIG. 2. The battery pack 2 has an L-shape and comprises two side gas vent openings 5a at the side surface 3a. The battery pack 2a comprises a connecting member 6a protruding from the side surface 3a of the battery pack 2a and has a height h_{c} as measured from the side surface 3a of the battery pack 2a. The battery pack 2a may optionally comprise one, two, three, four or more connecting members 6a protruding from the side surfaces 3a of the battery pack 2a and being in contact with an adjacent battery pack.

The two side gas vent openings 5a provided on the same side 3a are arranged offset, as seen in a height direction H of the battery pack 2a.

### EXAMPLE LIST

Example 1: An ESS comprising a plurality of battery packs arranged side-by-side, each of the battery packs being spaced from an adjacent battery pack such that the side surfaces of the adjacent battery packs form inter-battery pack gas channels and wherein each of the battery pack is provided with a side gas vent opening to one of the inter-battery pack gas channels.

Example 2: The ESS according to example 1, wherein the battery packs are mechanically interconnected to each other.

Example 3: The ESS according to example 2, wherein each one of the battery packs are mechanically connected to the adjacent battery pack(s).

Example 4: The ESS according to any one of the preceding examples, wherein the side gas vent openings are provided with a directional cap, directing the gas exiting the side gas vent opening to flow tangential to the side surface of the battery pack on which the respective side gas vent opening is provided.

Example 5: The ESS according to any one of the preceding example, wherein the adjacent battery packs are in physical contact with each other at respective connecting members protruding from the respective side surfaces of the battery packs.

Example 6: The ESS according to example 4 and 5, wherein a combined height (hi + h₂) of the connecting members of the adjacent battery pack, as measured from a main side surface of the respective battery pack, is greater than the height (h_{c}) of the direction cap provided between the side surfaces of the respective battery pack.

Example 7: The ESS according any of the preceding examples, wherein each one of the battery packs is provided with one or more side gas opening per opposing side surface.

Example 8: The ESS according any one of any one of examples 1 to 5, wherein each one of the battery packs is provided with a first and a second side gas opening per opposing side surface.

Example 9: The ESS according any one of the preceding examples, wherein the ESS comprises a first and a second end plate at a respective first and second opposing side of the ESS, the first and the second opposing sides of the ESS being formed by the respective outmost sides of the two outermost battery packs of the ESS, and wherein the respective first and second end plates are spaced from the respective outermost battery packs such that an outermost side surface of the respective outermost battery packs together with the respective first and second end plates form a respective end plate/battery pack gas channel.

Example 10: The ESS of any one of the preceding examples, wherein the adjacent battery packs are provided with a respective side gas vent opening to the same inter-battery pack gas channel and wherein these side gas vent openings are arranged in non-overlapping positions.

Example 11: The ESS of any one of the preceding examples, wherein each one of the plurality of battery packs are L-shaped and comprises two side gas vent opening on each side and wherein the two side gas vent opening provided on the same side are arranged offset, as seen in a height direction of the ESS.

Example 12: The ESS according to any one of the preceding examples, wherein the ESS comprises a side protection plate extending over a transverse side of the battery packs of the ESS.

Example 13: The ESS according to example 11, wherein the side protection plate is a common side protection plate for each one of the plurality of battery packs covering the entire transverse side of the ESS.

Example 14: The ESS according to example 11 or 12, wherein the side protection plate is a steel side protection plate.

Example 15: The ESS according to any one of examples 11 to 14, wherein an outlet the inter-battery pack gas channels is provided at an upper side and/or bottom side of the ESS.

Example 16: The ESS according to any one of the preceding examples, where the inter-battery pack gas channels are void channels.

Example 17: An electrical propulsion system comprising an electrical machine and an ESS according to any one of examples 1 to 16, wherein the electric machine is configured to receive power from the ESS.

Example 18: A vehicle comprising an ESS according to any one of the examples 1 to 16 or an electrical propulsion system according to example 17.

Example 19: A stationary energy storing system comprising an ESS according to any one of examples 1 to 16.

Example 20: A marine vessel comprising an ESS according to any one of examples 1 to 15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electrical storage system (ESS) (1) comprising a plurality of battery packs (2a,2b,2c) arranged side-by-side, each of the battery packs (2a,2b,2c) being spaced from an adjacent battery pack (2a,2b,2c) such that the side surfaces (3a,3b,3c) of the adjacent battery packs (2a,2b,2c) form inter-battery pack gas channels (4) and wherein each of the battery packs (2a,2b,2c) is provided with a side gas vent opening (5a,5b,5c) to one of the inter-battery pack gas channels (4).

2. The ESS (1) according to claim 1, wherein the battery packs (2a,2b,2c) are mechanically interconnected to each other.

3. The ESS (1) according to claim 2, wherein each one of the battery packs (2a,2b,2c) are mechanically connected to the adjacent battery pack(s) (2a,2b,2c).

4. The ESS (1) according to any one of the preceding claims, wherein the side gas vent openings (5a,5b,5c) are provided with a directional cap (7), directing the gas exiting the side gas vent opening to flow tangential to the side surface of the battery pack (2a,2b,2c) on which the respective side gas vent opening (5a,5b,5c) is provided.

5. The ESS (1) according to claim 3 and 4, wherein a combined height (hi + h₂) of the connecting members (6a,6b,6c) of adjacent battery packs (2a,2b,2c), as measured from a side surface (3a,3b,3c) of the respective battery pack (2a,2b,2c), is greater than a height (h_{c}) of the direction cap (7) provided between the side surfaces (3a,3b,3c) of the adjacent battery packs (2a,2b,2c).

6. The ESS (1) according to any one of any one of claims 1 to 5, wherein each one of the battery packs (2a,2b,2c) is provided with a first and a second side gas vent opening (5a,5b,5c) per opposing side surface (3a,3b,3c).

7. The ESS (1) according to any one of the preceding claims, wherein the ESS (1) comprises a first and a second end plate (8,9) at a respective first and second opposing side (10, 11) of the ESS, the first and the second opposing sides (10,11) of the ESS (1) being formed by the respective outmost sides (12,13) of the two outermost battery packs (2c,2b) of the ESS (1), and wherein the respective first and second end plates (8,9) are spaced from the respective outermost battery packs (2c,2b) such that an outermost side surface (12,13) of the respective outermost battery packs (2c,2b) together with the respective first and second end plates (8,9) form a respective end plate/battery pack gas channel (16).

8. The ESS (1) according to any one of the preceding claims, wherein the adjacent battery packs (2a,2b,2c) are provided with a respective side gas vent opening (5a,5b,5c) to the same inter-battery pack gas channel (4) other one of the adjacent battery packs (2a,2b,2c) and wherein these side gas vent openings (5a,5b,5c) are arranged in non-overlapping positions.

9. The ESS (1) according to any one of the preceding claims, wherein each one of the battery packs (2a,2b,2c) is L-shaped and comprises two side gas vent openings (5a,5b,5c) on each opposing side (3a,3b,3c) and wherein the two side gas vent openings (5a,5b,5c) provided on the same side (3a,3b,3c) are arranged offset, as seen in a height direction of the ESS (1).

10. The ESS (1) according to any one of the preceding claims, wherein the ESS (1) comprises a side protection plate (17) extending over a longitudinal side (18) of the battery packs (2a,2b,2c) of the ESS (1).

11. The ESS (1) according to any one of the preceding claims, where the inter-battery pack gas channels (4) are void channels.

12. An electrical propulsion system comprising one or more electric traction motors (101) and an ESS (1) according to any one of claims 1 to 16, wherein the one or more electric traction motors (101) is/are configured to receive power from the ESS (1).

13. A vehicle comprising an ESS (1) according to any one of the claims 1 to 11 or an electrical propulsion system according to claim 12.

14. A stationary energy storing system comprising an ESS (1) according to any one of claims 1 to 16.

15. A marine vessel comprising an ESS (1) according to any one of claims 1 to 15.
